# EUROPÄISCHE PATENTSCHRIFT

(11) **EP 2 826 365 B1**
(45) Veröffentlichungstag und Bekanntmachung des Hinweises auf die Patenterteilung: **29.05.2019**
(21) Anmeldenummer: 13003733.6
(22) Anmeldetag: 25.07.2013
(51) Int. Cl.: A01K 3/00, E04H 17/18

(54) **Zaunelement**
Fence element
Elément de clôture

(30) Priorität: 17.07.2013 DE 202013006450 U
(43) Veröffentlichungstag der Anmeldung: 21.01.2015
(73) Patentinhaber: PATURA KG, 63925 Laudenbach (DE)
(72) Erfinder: ALLIÉ, Bernd, 63897 Miltenberg (DE)
(74) Vertreter: Herrmann, Uwe

(56) Entgegenhaltungen:
- FR-A5- 2 227 755
- US-A- 4 609 185
- US-A- 4 844 424

## Beschreibung

Die vorliegende Erfindung betrifft ein Zaunelement, insbesondere zur Begrenzung des Bewegungsbereiches von Tieren mit einem ersten und mit einem zweiten seitlichen Pfosten und mit einer Mehrzahl von im Querschnitt länglichen Querrohren, die zwischen dem ersten und zweiten seitlichen Pfosten angeordnet sind. Ein solches Zaunelement ist aus der US-A-4 844 424 bekannt.

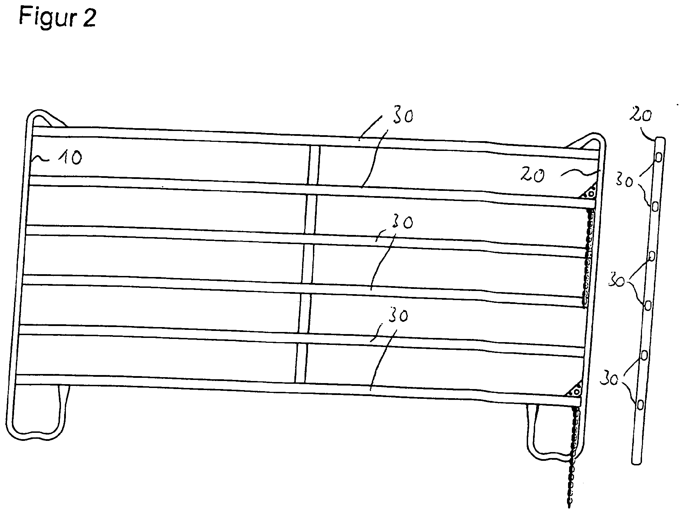

Aus dem Stand der Technik ist es bekannt, Zaunelemente, sogenannte Panels, zur mobilen Begrenzung des Bewegungsbereiches von Tieren bzw. zur Unterbringung von Tieren einzusetzen. Bei diesen Zaunelementen handelt es sich um meist geschweißte Stahlgitter aus zwei seitlichen Pfosten und zwischen diesen verlaufenden Querrohren, die als Oval-Profilrohre ausgebildet sind. Ein solches Zaunelement ist beispielsweise aus Figur 2 ersichtlich.

Figur 2 zeigt das Zaunelement gemäß dem Stand der Technik in der linken Darstellung in einer Ansicht von vorne und in der rechten Darstellung in einer Schnittansicht gemäß einer vertikal durch das Zaunelement verlaufenden Ebene.

Wie dies aus der Ansicht gemäß Figur 2, linke Darstellung hervorgeht, besteht das Zaunelement gemäß dem Stand der Technik aus einem ersten seitlichen Pfosten 10 und einem zweiten seitlichen Pfosten 20. Zwischen diesen beiden seitlichen Pfosten 10, 20 erstrecken sich eine Mehrzahl von horizontal verlaufenden Querrohren 30, die voneinander beabstandet sind, wie dies aus Figur 2 hervorgeht.

Der erste und der zweite seitliche Pfosten 10, 20 sind in ihrem unteren Endbereich u-förmig gebogen und bilden in diesem Bereich Fußteile der Zaunelemente. Der Endbereich dieses u-förmig abgebogenen Abschnittes steht mit dem untersten Querrohr in Verbindung.

Ebenso sind die seitlichen Pfosten 10, 20 in ihrem oberen Endbereich gebogen und zwar derart, dass der Endbereich mit dem obersten Querrohr in Verbindung steht, wie dies ebenfalls aus Figur 2 hervorgeht.

Aus der Schnittansicht gemäß Figur 2 wird deutlich, dass die Querrohre 30, die in ihren Endbereichen mit den seitlichen Pfosten 10, 20 verschweißt sind, im Querschnitt nicht rund, sondern oval ausgeführt sind.

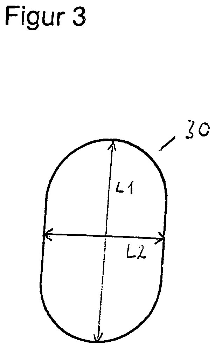

Ein solches Ovalrohr ist im Querschnitt des Weiteren in Figur 3 dargestellt. Wie dies aus Figur 3 hervorgeht, sind die Querrohre 30 somit länglich ausgeführt, was bedeutet, dass ihre größte Erstreckung L1 in der dargestellten Querschnittebene größer ist als jede andere Erstreckung und insbesondere als die Erstreckung in Querrichtung L2.

Aus Figur 2 ergibt sich weiter, dass die Querrohre 30 bei der aus dem Stand der Technik bekannten Ausführung stehend angeordnet sind, d. h. dass die Längsachse L1 der Querrohre vertikal ausgerichtet ist.

Zaunelemente, wie sie beispielsweise in Figur 2 dargestellt sind, sind im Anwendungsfall größeren Belastungen und auch größeren Querbelastungen ausgesetzt, sodass der vorliegenden Erfindung die Aufgabe zugrunde liegt, ein Zaunelement der eingangs genannten Art dahingehend weiterzubilden, dass dessen Stabilität und damit dessen Belastbarkeit gegenüber dem bekannten Zaunelement erhöht ist.

Diese Aufgabe wird durch ein Zaunelement mit den Merkmalen des Anspruchs 1 gelöst.

Danach ist vorgesehen, dass wenigstens eines der Querrohre, das nicht das oberste oder das unterste Querrohr bildet, nicht stehend angeordnet ist.

Aus der Ausführungsform gemäß dem Stand der Technik in Figur 2 ergibt sich, dass sämtliche Querrohre stehend angeordnet sind.

Davon abweichend ist erfindungsgemäß vorgesehen, dass wenigstens eines der Querrohre nicht stehend angeordnet ist, sondern beispielsweise liegend, was bedeutet, dass deren längste Erstreckung L1 horizontal verläuft und nicht wie in Figur 2 ersichtlich vertikal.

Durch eine solche Ausgestaltung bzw. Anordnung wenigstens eines der Querrohre wird eine Stabilitätsverbesserung gegenüber dem aus dem Stand der Technik bekannten Zaunelement erreicht. Erfindungsgemäß sind somit nicht alle Querrohre hochkant angeordnet, sondern wenigstens eines der Querrohre ist in einer davon abweichenden Positionierung angeordnet.

Besonders vorteilhaft ist es im Hinblick auf die Stabilität des Zaunelementes, wenn das zu dem obersten Querrohr und / oder zu dem untersten Querrohr benachbarte Querrohr nicht stehend, d. h. nicht hochkant, angeordnet ist.

Erfindungsgemäß ist vorgesehen, dass wenigstens eines der genannten Querrohre liegend angeordnet ist oder auch derart, dass dessen im Querschnitt verlaufende Längsachse L1 schräg angeordnet ist. Auch bei einer schrägen Anordnung in der Schnittebene der Querrohre liegenden Längsachse ergibt sich gegenüber dem bekannte Zaunelement eine Stabilitätsverbesserung.

Weiterhin kann vorgesehen sein, dass das Zaunelement insgesamt sechs Querrohre aufweist und dass es sich bei den genannten Querrohren, die nicht hochkant angeordnet sind um das zweite und um das fünfte Querrohr handelt.

Es hat sich gezeigt, dass eine Optimierung der Stabilität insbesondere dann erreicht wird, wenn das zweite und das fünfte Rohr jeweils nicht hochkant angeordnet sind, sondern beispielsweise quer, d. h. liegend.

In einer weiteren Ausgestaltung der Erfindung ist vorgesehen, dass die Höhe der Querrohre (d. h. die in der Schnittebene liegende größte Längserstreckung L1) der Breite der seitlichen Pfosten entspricht, an denen die Querrohre angeordnet sind.

Vorzugsweise ist vorgesehen, dass wenigstens eines der Querrohre oder alle Querrohre einen ovalen Querschnitt aufweist. Ein ovaler Querschnitt ist aus dem Stand der Technik gemäß Figur 2 bekannt, jedoch nicht die Orientierung der Querrohre gemäß der vorliegenden Erfindung.

Anstatt eines ovalen Querschnittes ist es ebenfalls denkbar, dass eines, mehrere oder alle der Querrohre einen rechteckigen oder länglichen vieleckigen Querschnitt aufweisen. Auch bei einem rechteckigen oder länglichen vieleckigen Querschnitt ist bezogen auf die Querschnittebene der Querrohre eine längste Erstreckung vorgesehen, die eine größere Länge aufweist als jede davon abweichende Erstreckung, insbesondere eine Erstreckung in senkrechter Richtung dazu.

Die Querrohre müssen damit also nicht unbedingt oval ausgeführt sein, sie können auch rechteckig oder länglich, z. B. viereckig, ausgebildet sein, sodass eine Anordnung hochkant bzw. davon abweichend liegend oder schräg möglich ist.

In weiterer Ausgestaltung der Erfindung ist vorgesehen, dass die Querrohre mit den seitlichen Pfosten verschweißt sind.

Vorzugsweise bestehen die Querrohre und die seitlichen Pfosten aus Stahl.

Bevorzugt ist es, wenn die seitlichen Pfosten senkrecht und / oder die Querrohre horizontal verlaufen.

Die vorliegende Erfindung betrifft des Weiteren einen Zaun mit wenigstens einem, vorzugsweise mit einer Mehrzahl von Zaunelementen gemäß einem der Ansprüche 1 bis 9.

Die erfindungsgemäßen Zaunelemente sind vorzugsweise mobil, was bedeutet, dass sie von dem oder den Nutzern oder maschinell bewegt werden können.

Vorzugsweise sind des Weiteren geeignete Verbindungsmittel, wie beispielsweise Ketten, Haken, Ösen vorgesehen, mittels derer zwei oder mehr als zwei Zaunelemente zu einem Zaun verbunden werden können.

Weitere Einzelheiten und Vorteile der Erfindung werden anhand eines in der Zeichnung dargestellten Ausführungsbeispiels näher erläutert. Es zeigen:
- Figur 1:: eine Ansicht eines erfindungsgemäßen Zaunelementes von vorne und in einer Schnittansicht,
- Figur 2:: eine Ansicht auf ein Zaunelement gemäß dem Stand der Technik von vorne und in einer Schnittansicht und
- Figur 3:: eine Querschnittsansicht eines Querrohrs.

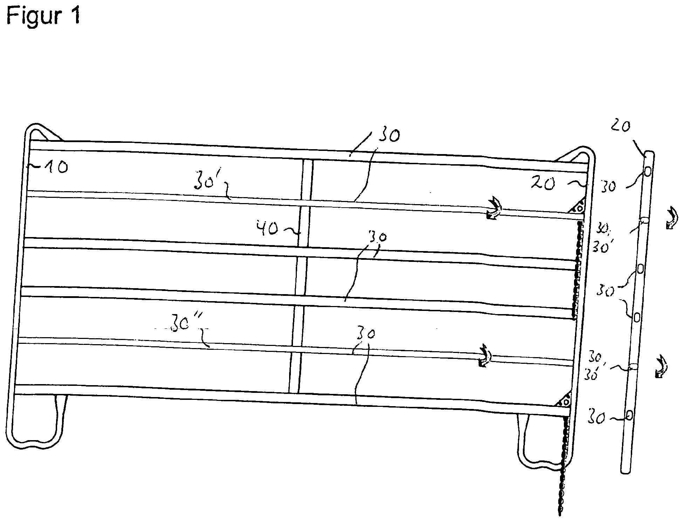

Figur 1, linke Darstellung, zeigt in einer Frontansicht ein Zaunelement gemäß der vorliegenden Erfindung.

Das Zaunelement entspricht in seinem Aufbau grundsätzlich dem zu Figur 2 erläuterten Zaunelement gemäß dem Stand der Technik, sodass insoweit Bezug genommen wird.

Abweichend von dem Zaunelement gemäß Figur 2 sind jedoch nicht alle Querrohre 30 stehend, d. h. hochkant, angeordnet, sondern wie aus Figur 1 ersichtlich, sind das von oben gesehen zweite und fünfte Querrohr nicht hochkant, sondern quer eingesetzt. Insbesondere bei diesen beiden Rohren ergibt sich eine optimale Lastverteilung und ein wenig störender Einfluss auf die Tiere.

Wie dies aus Figur 1 hervorgeht, ist somit eine bevorzugte Ausgestaltung des Zaunelementes die, dass insgesamt sechs Querrohre vorliegen, von denen das zweite und fünfte Querrohr, d. h. die jeweils zu den oben und unten liegenden benachbarten Querrohre nicht stehend, sondern liegend angeordnet sind, wie dies durch die Pfeile in Figur 1 angedeutet ist.

Diese Querrohre, die in Figur 1 mit dem Bezugszeichen 30' und 30" gekennzeichnet sind, können identisch ausgeführt sein zu allen weiteren Querrohren 30, jedoch mit dem Unterschied der Einbauorientierung, wie sich dies aus Figur 1 ergibt.

Unter dem Begriff einer liegenden Anordnung, wie sie in Figur 1 ersichtlich ist, ist zu verstehen, dass die größte Längserstreckung L1 in dessen Querschnittsebene des Querrohrs horizontal verläuft und nicht wie in Figur 2 ersichtlich vertikal.

Grundsätzlich ist es auch denkbar von der Erfindung mit umfasst, nur eines der Querrohre nicht hochkant, sondern liegend oder schräg anzuordnen. Eine besonders bevorzugte Ausgestaltung der Erfindung besteht jedoch darin, dass genau zwei Querrohre und vorzugsweise genau das zweite und fünfte Querrohr liegend oder schräg, jedenfalls nicht hochkant angeordnet sind.

Wie dies weiter aus Figur 1 hervorgeht, erstreckt sich in etwa in der Mitte des Zaunelementes eine vertikale Strebe 40 von dem obersten bis zu dem untersten Querrohr. Diese Strebe 40 dient der weiteren Stabilisierung des Zaunelementes.

## Patentansprüche

1. Zaunelement zur Begrenzung des Bewegungsbereiches von Tieren mit einem ersten und mit einem zweiten seitlichen Pfosten und mit einer Mehrzahl von im Querschnitt länglichen Querrohren, die zwischen dem ersten und dem zweiten seitlichen Pfosten angeordnet sind, **dadurch gekennzeichnet, dass** die in der Querschnittsebene liegende größte Längsachse (L1) des obersten und des untersten Querrohres vertikal ausgerichtet ist und die in der Querschnittebene liegende größte Längsachse (L1) wenigstens eines der Querrohre, das nicht das oberste oder das unterste Querrohr bildet, horizontal oder schräg ausgerichtet ist.

2. Zaunelement nach Anspruch 1, **dadurch gekennzeichnet, dass** das zu dem obersten Querrohr und/oder das zu dem untersten Querrohr benachbarte Querrohr horizontal oder schräg ausgerichtet ist.

3. Zaunelement nach einem der vorhergehenden Ansprüche, **dadurch gekennzeichnet, dass** das Zaunelement sechs Querrohre aufweist und dass es sich bei den genannten Querrohren, die nicht horizontal oder schräg augerichtet sind, um das 2. und das 5. Querrohr handelt.

4. Zaunelement nach einem der vorhergehenden Ansprüche, **dadurch gekennzeichnet, dass** die in der Schnittebene liegende größte Längserstreckung der Querrohre der Breite der seitlichen Pfosten entspricht.

5. Zaunelement nach einem der vorhergehenden Ansprüche, **dadurch gekennzeichnet, dass** wenigstens eines der Querrohre einen ovalen Querschnitt aufweist.

6. Zaunelement nach einem der Ansprüche 1 bis 4, **dadurch gekennzeichnet, dass** wenigstens eines der Querrohre einen rechteckigen oder länglichen, vieleckigen Querschnitt aufweist.

7. Zaunelement nach einem der vorhergehenden Ansprüche, **dadurch gekennzeichnet, dass** die Querrohre mit den seitlichen Pfosten verschweißt sind.

8. Zaunelement nach einem der vorhergehenden Ansprüche, **dadurch gekennzeichnet, dass** die Querrohre und die seitlichen Pfosten aus Stahl bestehen.

9. Zaun mit wenigstens einem, vorzugsweise mit einer Mehrzahl von Zaunelementen gemäß einem der Ansprüche 1 bis 8.

## Claims

1. Fence element for limiting the movement range of animals comprising a first and a second lateral post, and comprising a plurality of transverse tubes, elongated in the cross-section, which are arranged between the first and the second lateral post, **characterized in that** the largest longitudinal axis (L1) located in the cross-sectional plane, of the uppermost and the lowermost transverse tubes is vertically oriented, and the largest longitudinal axis (L1) located in the cross-sectional plane of at least one of the transverse tubes, that does not form the uppermost or lowermost transverse tube, is oriented horizontally or obliquely.

2. Fence element according to claim 1, **characterized in that** the transverse tube neighboring the uppermost transverse tube and/or the lowermost transverse tube is oriented horizontally or obliquely.

3. Fence element according to any one of the preceding claims, **characterized in that** the fence element comprises six transverse tubes, and **in that** the said transverse tubes, which are not horizontally or obliquely oriented, are the second and the fifth transverse tube.

4. Fence element according to any one of the preceding claims, **characterized in that** the largest longitudinal extension of the transverse tubes, located in the sectional plane, corresponds to the width of the lateral posts.

5. Fence element according to any one of the preceding claims, **characterized in that** at least one of the transverse tubes has an oval cross-section.

6. Fence element according to any one of claims 1 to 4, **characterized in that** at least one of the transverse tubes has a rectangular or elongate, polygonal cross-section.

7. Fence element according to any one of the preceding claims, **characterized in that** the transverse tubes are welded to the lateral posts.

8. Fence element according to any one of the preceding claims, **characterized in that** the transverse tubes and the lateral posts consist of steel.

9. Fence, comprising at least one, preferably a plurality of fence elements according to any one of claims 1 to 8.

## Revendications

1. Elément de clôture servant à délimiter la zone de déplacement d'animaux avec un premier et avec un deuxième poteau latéral et avec une multitude de tubes transversaux allongés dans la section transversale, qui sont disposés entre le premier et le deuxième poteau latéral, **caractérisé en ce que** l'axe longitudinal (L1) le plus grand, situé dans le plan de section transversale du tube transversal le plus haut et du tube transversal le plus bas est orienté de manière verticale et l'axe longitudinal (L1) le plus grand, situé dans le plan de section transversale, d'au moins un des tubes transversaux, qui ne forme pas le tube transversal le plus haut ou le tube transversal le plus bas, est orienté de manière horizontale ou de manière oblique.

2. Elément de clôture selon la revendication 1, **caractérisé en ce que** le tube transversal adjacent au tube transversal le plus haut et/ou le tube transversal le plus bas est orienté de manière horizontale ou de manière oblique.

3. Elément de clôture selon l'une quelconque des revendications précédentes, **caractérisé en ce que** l'élément de clôture présente six tubes transversaux, et lesdits tubes transversaux, qui ne sont pas orientés de manière horizontale ou de manière oblique, sont le deuxième et le cinquième tube transversal.

4. Elément de clôture selon l'une quelconque des revendications précédentes, **caractérisé en ce que** l'extension longitudinale la plus grande, située dans le plan de coupe, des tubes transversaux correspond à la largeur des poteaux latéraux.

5. Elément de clôture selon l'une quelconque des revendications précédentes, **caractérisé en ce qu'**au moins un des tubes transversaux présente une section transversale ovale.

6. Elément de clôture selon l'une quelconque des revendications 1 à 4, **caractérisé en ce qu'**au moins un des tubes transversaux présente une section transversale rectangulaire ou allongée, polygonale.

7. Elément de clôture selon l'une quelconque des revendications précédentes, **caractérisé en ce que** les tubes transversaux sont soudés avec les poteaux latéraux.

8. Elément de clôture selon l'une quelconque des revendications précédentes, **caractérisé en ce que** les tubes transversaux et les poteaux latéraux consistent en acier.

9. Clôture avec au moins un, de préférence avec une multitude d'éléments de clôture selon l'une quelconque des revendications 1 à 8.
